Europäisches Patentamt

European Patent Office

Office européen des brevets

(11) Veröffentlichungsnummer : **0 079 582**
**B1**

# EUROPÄISCHE PATENTSCHRIFT

(45) Veröffentlichungstag der Patentschrift :
**10.09.86**

(51) Int. Cl.⁴ : **H 01 M 10/39**

(21) Anmeldenummer : **82110389.2**

(22) Anmeldetag : **11.11.82**

(54) **Elektrochemische Speicherzelle.**

(30) Priorität : **13.11.81 DE 3145112**

(43) Veröffentlichungstag der Anmeldung :
**25.05.83 Patentblatt 83/21**

(45) Bekanntmachung des Hinweises auf die Patenterteilung : **10.09.86 Patentblatt 86/37**

(84) Benannte Vertragsstaaten :
**BE FR GB IT NL**

(56) Entgegenhaltungen :
**US-A- 3 883 367**
**US-A- 3 951 689**
**US-A- 3 994 745**
**US-A- 4 117 208**

(73) Patentinhaber : **BROWN, BOVERI & CIE Aktiengesellschaft
Kallstadter Strasse 1
D-6800 Mannheim 31 (DE)**

(72) Erfinder : **Haberfellner, Fritz
Kleinschmidtstrasse 20
D-6900 Heidelberg (DE)**
Erfinder : **Mennicke, Stefan, Dr.
Türkisweg 27
D-6906 Leimen-Gauangelloch (DE)**
Erfinder : **Prappacher, Gerd
Nikolaus-Lenau-Strasse 3
D-6830 Schwetzingen (DE)**

(74) Vertreter : **Kempe, Wolfgang, Dr. et al
c/o Brown, Boveri & Cie AG Postfach 351
D-6800 Mannheim 1 (DE)**

## Beschreibung

Die Erfindung bezieht sich auf eine elektrochemische Speicherzelle auf der Basis von Natrium und Schwefel mit mindestens einem für die Aufnahme des Anolyten bestimmten Anodenraum und einem für die Aufnahme des Katholyten bestimmten Kathodenraum, welche durch einen alkaliionenleitenden Festelektrolyten voneinander getrennt und mindestens bereichsweise von einem metallischen Gehäuse begrenzt sind.

Solche wiederaufladbaren elektrochemischen Speicherzellen mit Festelektrolyten eignen sich sehr gut zum Aufbau von Akkumulatoren hoher Energie- und Leistungsdichte. Die in den Alkali/Schwefel-Speicherzellen verwendeten Festelektrolyten, die beispielsweise aus Beta-Aluminium-oxid gefertigt sind, zeichnen sich dadurch aus, daß die Teilleitfähigkeit des beweglichen Ions sehr hoch und die Teilleitfähigkeit der Elektronen um vielfache Zehnerpotenzen kleiner ist. Durch die Verwendung solcher Festelektrolyten für den Aufbau von elektrochemischen Speicherzellen wird erreicht, daß praktisch keine Selbstentladung stattfindet, da die Elektronenleitfähigkeit vernachlässigbar ist und die Reaktionssubstanzen auch nicht als neutrale Teilchen durch den Festelektrolyten gelangen können.

Ein spezielles Beispiel für solche wiederaufladbaren elektrochemischen Speicherzellen sind Natrium/Schwefel-Speicherzellen, die einen Festelektrolyten aus Beta-Aluminiumoxid besitzen. Bei diesen Speicherzellen gibt es zwei Ausführungsformen, und zwar die sogenannte « normale Speicherzelle » und die « inverse Speicherzelle ». Der Unterschied zwischen den beiden Speicherzellen wird durch die unterschiedliche Anordnung der beiden Reaktandenräume bewirkt. Bei der erstgenannten Natrium/Schwefel-Speicherzelle befindet sich der Anodenraum innerhalb des Festelektrolyten, während der Kathodenraum zwischen dem Festelektrolyten und dem metallischen Gehäuse der Speicherzelle angeordnet ist. Im Gegensatz dazu befindet sich der Kathodenraum bei der inversen Speicherzelle innerhalb des Festelektrolyten, während der Anodenraum zwischen dem metallischen Gehäuse und dem Festelektrolyten angeordnet ist. Ein überaus großer Vorteil dieser inversen Natrium/Schwefel-Speicherzellen liegt darin, daß sie eine wesentlich bessere Korrosionsbeständigkeit aufweisen, als die oben erwähnten normalen Natrium/-Schwefel-Speicherzellen. Diesem Vorteil steht der Nachteil gegenüber daß diese inversen Speicherzellen herkömmlicher Bauweise eine geringere Kapazität aufweisen als normale Speicherzellen, und das bei gleicher Bauausführung und Größe des Festelektrolyten. Beim Aufbau einer Batterie aus inversen Speicherzellen, die einen vorgebbaren Energieinhalt aufweisen soll, muß die Anzahl der Speicherzellen größer gewählt werden als bei der Verwendung von normalen Speicherzellen, damit der gewünschte Energieinhalt erzielt werden kann.

Aus der US-PS 3 951 689 ist eine elektrochemische Speicherzelle auf der Basis von Natrium und Schwefel bekannt. Der Kathodenraum dieser Speicherzelle ist in zwei Bereich aufgeteilt. Der äußere, an das Gehäuse angrenzende Bereich, enthält den Schwefel, während der Bereich um den Festelektrolyten als Reaktionszone dient. Die Speicherzelle ist zusätzlich mit einem Vorratsbehälter ausgerüstet, der bereits bei der Herstellung der Zelle mit Polysulfid gefüllt wird. Über einen Graphitfilz, steht dieser Vorratsbehälter mit dem Reaktionsbereich des Kathodenraums in Verbindung. Bei der Ladung der Speicherzelle kann Polysulfid aus dem Vorratsbehälter in den Reaktionsbereich transportiert werden, wo es chemisch umgesetzt wird.

Der Erfindung liegt die Aufgabe zugrunde eine inverse Natrium/Schwefel-Speicherzelle mit einer erhöhten Energiedichte und einer vergrößerten Kapazität so zu schaffen, daß sie bezüglich allen Anforderungen, die an sie während des Betriebs gestellt werden einer normalen Speicherzelle mit gleich großem Festelektrolyten mindestens entspricht.

Diese Aufgabe wird erfindungsgemäß durch die kennzeichnenden Merkmale des Patentanspruchs 1 gelöst.

Erfindungsgemäß ist der Kathodenraum über eine als Verbindungselement dienende Matte mit dem Vorratsbehälter verbunden. Die Matte besteht aus einem porösen Material, das bevorzugt von Natrium-Polysulfid benetzt wird. Die Matte ist bereichsweise sowohl im Kathodenraum als auch im Vorratsbehälter angeordnet. Innerhalb des Kathodenraums erstreckt sich die Matte über die gesamte Länge des Festelektrolyten und liegt an diesem fest an. Innerhalb des Vorratsbehälters ist die Matte bis zu dessen geschlossenem Ende geführt und liegt ebenfalls fest an den inneren Begrenzungsflächen des Vorratsbehälters an. Vorzugsweise wird die Matte aus Keramikfasern hergestellt. Erfindungsgemäß wird sie durch ein Stützelement an den Festelektrolyten und an die inneren Begrenzungsflächen des Vorratsbehälters angepreßt. Das Stützelement ist aus einem Metallnetz gefertigt. Das Metallnetz ist ebenso lang wie die Matte. Vorzugsweise wird es aus Molybdän hergestellt. Der übrige Bereich des Kathodenraums ist mit Schwefel und einem Graphitfilz ausgefüllt. Eine Abdeckplatte trennt den Kathodenraum von dem Vorratsbehälter. Zwischen der Abdeckplatte und dem Festelektrolyten ist ein freier Ringraum für den Durchlauf der Matte und das Stützelement vorgesehen. Die Abmessung der Matte ist so gewählt, daß die seitlichen Begrenzungsflächen des Festelektrolyten und des Vorratsbehälters durch sie vollständig überdeckt werden.

Durch die Verbindung des Kathodenraums mit dem Vorratsbehälter über das Verbindungselement, welches vorzugsweise aus einer Matte besteht, die aus Keramikfasern hergestellt ist, wird sichergestellt, daß aus dem Kathodenraum nur Natrium-Polysulfid und kein Schwefel in den Vorratsraum gelangen kann. Eine inverse Speicherzelle, die mit einem solchen Vorratsbehälter ausgerüstet ist, weist eine merklich bessere Kapazität und Energiedichte auf, als die herkömmlich gebauten inversen Speicherzellen. Wird die erfindungsgemäße inverse Speicherzelle, deren Kathodenraum bis direkt unter die Abdeckplatte mit Schwefel gefüllt ist, entladen, so wandern aus dem Anodenraum Natriumionen durch den Festelektrolyten hindurch in den Kathodenraum. Hierdurch wird das Volumen der im Kathodenraum befindlichen Reaktionsaubstanzen vergrößert und bei den dabei ablaufenden chemischen Reaktionen wird Natrium-Polysulfid gebildet. Aufgrund der Dochtwirkung der Matte wird das Natrium-Polysulfid entlang des Festelektrolyten in Richtung auf den Vorratsbehälter zutransportiert. Durch den sich im Kathodenraum weiter aufbauenden Druck wird das in der keramischen Matte aufsteigende Natrium-Polysulfid in den Vorratsbehälter gedrückt. Wie bereits oben erwähnt, wird der Kathodenraum bei der Natrium/Schwefel-Speicherzelle mit Schwefel und einem Graphitfilz ausgefüllt. Der Graphitfilz wird vorzugsweise mit dem Schwefel getränkt. In den Kathodenraum wird soviel Schwefel eingefüllt, daß der Graphitfilz und der Festelektrolyt bei allen Betriebszuständen der Speicherzelle ständig mit Schwefel benetzt sind. Durch die Abdeckplatte, die den Kathodenraum von dem Vorratsbehälter trennt, wird der Schwefel im Kathodenraum zurückgehalten. Die keramische Matte die den Kathodenraum mit dem Vorratsbehälter für das Natrium-Polysulfid verbindet, weist die Eigenschaft auf, daß sie bevorzugt von dem Natrium-Polysulfid benetzt wird. Dadurch wird sichergestellt, daß der Schwefel über diese Matte nicht in den Vorratsbehälter gelangen kann. Wie bereits oben erwähnt, wird das Natrium-Polysulfid bei der Entladung der Speicherzelle gebildet und über die Matte in den Vorratsbehälter transportiert. Beim Aufladen der Speicherzelle wird das Polysulfid aus dem Vorratsbehälter in den Kathodenraum zurückgesaugt. Durch Oxidation erfolgt eine Trennung des Natrium-Polysulfids in Schwefel und Natrium. Durch diese Maßnahme wird erreicht, daß bei der Herstellung der Natrium/Schwefel-Speicherzelle der im Kathodenraum angeordnete Graphitfilz soweit mit Schwefel getränkt werden kann, daß der Kathodenraum vollständig ausgefüllt ist. Bei der Zunahme der im Kathodenraum sich ansammelnden Reaktionssubstanzen kann das Natrium-Polysulfid in den hierfür vorgesehen Vorratsraum transportiert werden, so daß innerhalb des Kathodenraums ständig ein ausreichendes Platzangebot für die, insbesondere bei der Entladung ständig sich neu bildenden Reaktionssubstanzen besteht. Bei der Herstellung der Speicherzelle braucht deshalb kein zusätzlicher Freiraum für diese Reaktionssubstanzen vorgesehen werden.

Die Erfindung wird nachfolgend anhand von Zeichnungen näher erläutert.

Es zeigen :

Figur 1 eine inverse Speicherzelle

Figur 2 eine normale Speicherzelle mit einem Vorratsbehälter

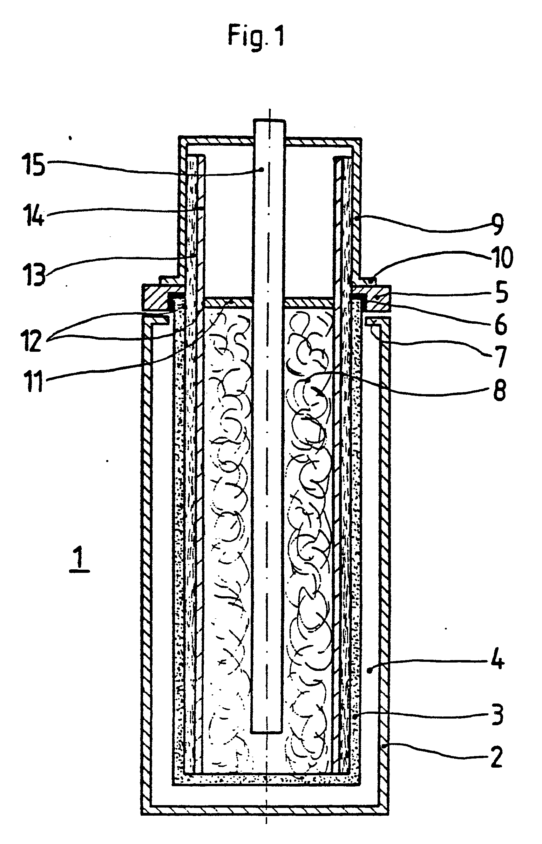

In Figur 1 ist eine inverse Natrium/Schwefel-Speicherzelle 1 dargestellt. Die Speicherzelle wird im wesentlichen durch ein metallisches Gehäuse 2 und einen Festelektrolyten 3 gebildet. Der Festelektrolyt 3 ist becherförmig ausgebildet und im Inneren des metallischen Gehäuses 2 angeordnet. Bei der hier dargestellten Ausführungsform ist der Festelektrolyt 3 aus Beta-Aluminiumoxid hergestellt. Die Abmessungen des Festelektrolyten 3 sind so gewählt, daß zwischen seinen Außenflächen und den Innenflächen des metallischen Gehäuses 2 ein zusammenhängender Zwischenraum 4 gebildet wird, der als Anodenraum dient. Der Festelektrolyt ist an seinem offenen Ende mit einem ringförmigen Isolierkörper 5 verbunden. Der Isolierkörper 5 ist aus Alpha-Aluminiumoxid gefertigt und über ein Glaslot 6 mit dem Festelektrolyten 3 verbunden. Der Isolierkörper 5 ist so ausgebildet, daß er über den Festelektrolyten 3 nach außenübersteht und die Funktion eines Flansches übernimmt. Das metallische Gehäuse 2 der Speicherzelle 1 weist an seinem offenen Ende einen nach innen gerichteten Flansch 7 auf. Auf diesen ist der Isolierkörper 5 aufgesetzt und abgestützt. Vorzugsweise wird zwischen dem Isolierkörper 5 und dem Flansch 7 noch eine Dichtung (hier nicht dargestellt) angeordnet. Der Innenbereich des Festelektrolyten 3 dient bei dieser Ausführungsform als Kathodenraum 8.

Über dem offenen Ende des Festelektrolyten 3 ist ein becherförmiger Behälter 9 angeordnet. Die innere Öffnungsweite des becherförmigen Behälters 9 ist an die innere Öffnungsweite des Festelektrolyten 3 angepaßt.

Der becherförmige Behälter 9 ist mit seinem offenen Ende dem Festelektrolyten 3 zugewandt. Er ist aus Metall gefertigt und besitzt einen nach außen weisenden Flansch 10, mit dem er auf dem Isolierkörper 5 abgestützt ist. Der Isolierkörper 5 und der Flansch 10 sind fest miteinander verbunden. Der becherförmige Behälter 9 bildet den Vorratsbehälter für das Natrium-Polysulfid. Im Bereich des Isolierkörpers 5 ist der Festelektrolyt 3 mit einer Abdeckplatte 11 versehen, die ihn von dem Vorratsbehälter 9 trennt. Zwischen der inneren Begrenzungsfläche des Festelektrolyten 3 und der Abdeckplatte 11 ist ein ringförmiger freier Raum 12 für den Durchtritt eines als Matte ausgebildeten Verbindungselementen 13 und eines Stützelementes 14 vorgesehen. Die Matte 13 ist aus einem porösen Material hergestellt, das die Eigenschaft besitzt, daß es ausschließlich von Natrium-Polysulfid benetz wird. Für die Fertigung der Matte 13 werden Keramikfasern verwendet. Die Matte 13 ist zu einem Zylinder gebogen und sowohl innerhalb des Festelektrolyten 3 als auch in dem Vorratsbehälter 9 angeordnet.

Die keramische Matte 13 überdeckt die gesamte innere Begrenzungsfläche des Festelektrolyten 3 und liegt an diesem fest an. Sie ist durch den freien Ringraum 12 hindurchgeführt und ragt, wie bereits oben erwähnt, auch in den Vorratsbehälter 9 hinein. Dort liegt sie ebenfalls an der inneren Begrenzungsfläche des Vorratsbehälters 9 an. Die Matte 13 erstreckt sich vom unteren geschlossenen Ende des Festelektrolyten bis fast zum geschlossenen Ende des Vorratsbehälters 9. Mit Hilfe des Stützelementes 14 wird die Matte 13 an die Innenflächen des Festelektrolyten und des Vorratsbehälters 9 gepreßt. Das Stützelement 14 wird durch ein metallisches Netz aus Molybdän gebildet, das zu einem Zylinder gebogen ist und mit einer definierten Vorspannung innerhalb des Festelektrolyten 3 und des Vorratsbehälters 9 angeordnet. Die Länge des Metallnetzes 14 ist an die Länge der keramischen Matte 13 angepaßt. Der zwischen dem Festelektrolyten 3 und seiner Abdeckplatte 11 bestehende freie Ringraum 12 ist so bemessen, daß neben der Matte 13 auch das Stützelement 14 vom Inneren des Festelektrolyten 3 aus in den Vorratsbehälter 9 geführt werden kann.

Der anodische Stromabnehmer wird bei dieser Speicherzelle durch das metallische Gehäuse 2 gebildet. Der kathodische Stromabnehmer 15 besteht bei diesem Ausführungsbeispiel aus einem Metallstab, der weit in den Festelektrolyten 3 hineinragt. Er durchsetzt die Abdeckplatte 11. Mit dieser ist er fest verbunden. Zusätzlich ist er durch den Vorratsbehälter 9 hindurchgeführt und steht über diesen einige Millimeter nach außen über. Mit dem geschlossenen Ende des Vorratsbehälters 9 ist der Metallstab ebenfalls verbunden. Durch die Befestigung des Abdeckplatte 11 an dem Metallstab erhält diese einen festen Halt innerhalb der Speicherzelle. Durch die zusätzliche Verbindung des Metallstabes 15 mit dem Vorratsbehälter 9 wird dieser fest mit der Speicherzelle 1 verbunden. Wie bereits oben erwähnt, dient der Innenraum des Festelektrolyten 3 als Kathodenraum 8. Der Ringraum zwischen dem Metallnetz 14 und dem kathodischen Stromabnehmer 15 ist bei dieser Ausführungsform vom unteren Ende des Festelektrolyten bis zur Abdeckplatte 11 hin mit einem Graphitfilz 16 ausgefüllt. Dieser ist vollständig mit Schwefel getränkt, so daß der Kathodenraum die für den Betrieb der Speicherzelle erforderliche Menge an Schwefel enthält und der Festelektrolyt 3 ständig damit benetzt ist.

Der Anodenraum 4 ist bei diesem Ausführungsbeispiel vollständig mit Natrium ausgefüllt. Ist die Speicherzelle geladen, so enthält der Kathodenraum 8 ausschließlich Schwefel. Wird die Speicherzelle nun entladen, so wandern Natriumionen aus dem Anodenraum 4 durch den Festelektrolyten 3 hindurch. Innerhalb der keramischen Matte 13 und in dem an sie angrenzenden Bereich kommt es jetzt zur Bildung von Natrium-Polysulfid. Dieses wandert aufgrund der Dochtwirkung der Matte 13 entlang des Festelektrolyten in den Vorratsbehälter 9. Da bei zunehmender Entladung der Speicherzelle immer mehr Natriumionen in den Kathodenraum 8 gelangen, steigt hierin der Druck aufgrund des sich vergrößernden Volumens der Reaktionssubstanzen. Durch diesen Druck wird das Natrium-Polysulfid immer weiter in den Vorratsbehälter 9 gedrückt. Der nicht mit den Natriumionen reagierende Schwefel verbleibt innerhalb des Graphitfilzes 16 und benetzt diesen und den Festelektrolyten 3. Durch die keramische Matte 13 wird das entstehende Natrium-Polysulfid in den Vorratsbehälter 9 transportiert, so daß der Kathodenraum 8 alle durch den Festelektrolyten wandernden Natriumionen aufnehmen kann. Im Kathodenraum 8 muß jedoch kein zusätzlicher Freiraum für die Aufnahme der bei der Entladung entstehenden Reaktionssubstanzen vorgesehen werden. Vielmehr kann der Kathodenraum 8 vollständig mit Schwefel und Graphitfilz ausgefüllt werden.

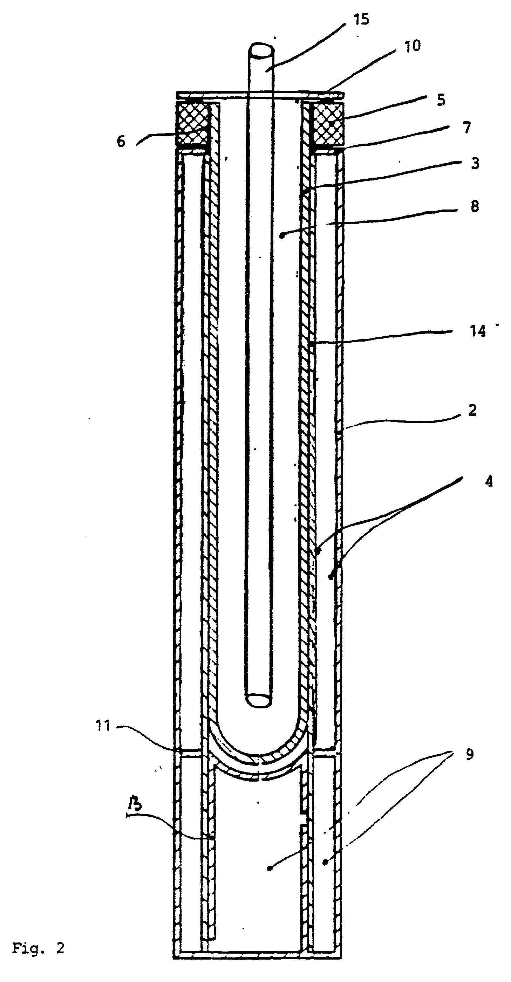

In Fig. 2 ist eine normale Natrium/Schwefel-Speicherzelle 1 dargestellt, die ebenfalls einen Vorratsbehälter für das Natrium-Polysulfid aufweist. Die hier gezeigte Natrium/Schwefel-Speicherzelle 1 umfaßt ein metallisches Gehäuse 2, das becherförmig ausgebildet ist und an seinem oberen offenen Ende einen nach innen weisenden Flansch 7 besitzt. Innerhalb dieses Gehäuses ist der ebenfalls becherförmig ausgebildete Festelektrolyt 3 angeordnet, der aus Beta-Aluminiumoxid gefertigt ist. Er weist an seinem oberen offenen Ende einen nach außen weisenden Flansch 5 auf, der durch einen Isolierring aus Alpha-Aluminiumoxid gebildet wird. Dieser Isolierring ist über ein Glaslot 6 mit dem Festelektrolyten 3 verbunden. Die Abmessungen des Festelektrolyten 3 sind so gewählt, daß zwischen seinen seitlichen inneren Begrenzungsflächen und den inneren Begrenzungsflächen des metallischen Gehäuses 2 ein zusammenhängender Zwischenraum verbleibt, der als Kathodenraum 4 dient. Das Innere des Festelektrolyten wird bei dieser Ausführungsform als Anodenraum 8 genutzt. Dieser ist mit flüssigem Natrium gefüllt. In den Anodenraum ragt ein Stromabnehmer 15 hinein, der durch einen Metallstab gebildet wird. Der Anodenraum 8 weist eine Verschlußplatte 10 auf, die aus einem isolierenden Material gefertigt ist, und auf dem Flansch 5 des Festelektrolyten 3 aufliegt. Der anodische Stromabnehmer 15 ist durch die Verschlußplatte 10 hindurchgeführt und steht einige Millimeter über diese nach außen über.

Die Höhe des Festelektrolyten 3 ist so gewählt, daß sie etwa 3/4 der Gesamthöhe des metallischen Gehäuses entspricht. Dadurch wird erreicht, daß 1/4 metallischen Gehäuses, und zwar sein unterer Bereich, als Vorratsbehälter 9 für das sich im Kathodenraum 4 während der Entladung der Speicherzelle 1 bildende Natriumpolysulfid dienen kann. Der Vorratsbehälter 9 ist durch einen nach innen weisenden Rand 11 gegen den Kathodenraum 4 abgetrennt, der in einem geringen Abstand vom unteren Ende des Festelektrolyten 3 endet. An den Außenflächen des Festelektrolyten 3 ist eine Matte 13 aus einem porösen Material angeordnet, die über das untere Ende des Festelektrolyten 3 hinaus verlängert und zwischen dem Rand 11 und dem Festelektrolyten 3 in den Vorratsbehälter 9 geführt ist. Die Matte 13 reicht bei den hier dargestellten Ausführungsbeispielen bis zum unteren Ende des metallischen Gehäuses 2. Das für die Herstellung der Matte 13 verwendete poröse Material besitzt die Eigenschaft, daß es ausschließlich von Natriumpolysulfid benetzt wird. Für die Fertigung der Matte 13 werden vorzugsweise Keramikfasern verwendet. Damit die Matte 13, innerhalb des Vorratsbehälters 9 ihre zylindrisch gebogene Form beibehält, ist ein Stützelement 14 vorgesehen. Dieses ist aus einem metallischen Netz, vorzugsweise einem Molybdännetz gefertigt. Das Stützelement 14 ist zylinderförmig gebogen und in seinen Abmessungen so gewählt, daß die Matte 13 innerhalb des Vorratsbehälters 9 an seinen Außenflächen anliegt. Das Stützelement 14 ist desweiteren so geformt, daß es in der Nachbarschaft des Festelektrolyten, insbesondere unterhalb dessen kuppenförmigem Ende eine schalenförmige Abstützung für den Festelektrolyten aufweist.

Durch die Anordnung des Vorratsbehälters 9 für das Natriumpolysulfid kann auch bei der normalen Ausführungsform der Speicherzelle 1 der Kathodenraum 4 vollständig mit Schwefel ausgefüllt werden. Ein Freiraum für die sich bildenden Reaktionssubstanzen ist nicht erforderlich, da das sich bei der Entladung der Speicherzelle 1 bildende Natriumpolysulfid sofort über die Matte 13 in den Vorratsbehälter transportiert wird. Bei der Aufladung der Speicherzelle wird diese Reaktionssubstanz auf dem gleichen Wege wieder in den Kathodenraum zurückgeholt.

**Patentansprüche**

1. Elektrochemische Speicherzelle (1) auf der Basis von Natrium und Schwefel mit mindestens einem für die Aufnahme des Anolyten bestimmten Anodenraum (4) und einem für die Aufnahme des Katholyten bestimmten Kathodenraum (8), welche durch einen alkaliionenleitenden Festelektrolyten (3) voneinander getrennt und mindestens bereichsweise von einem metallischen Gehäuse (2) begrenzt sind, wobei ein Vorratsbehälter (9) vorgesehen ist, der mit dem Kathodenraum (8) über ein Verbindungselement (13) verbunden ist, dadurch gekennzeichnet, daß der vor der Entladung vollständig leere Vorratsbehälter (9) zur Aufnahme des sich bei der Entladung bildenden Natriumpolysulfids vorgesehen ist, das mit Hilfe des sich bei der Entladung im Kathodenraum aufbauenden hytrostatischen Drucks in den Vorratsbehälter (9) transportierbar ist, und daß die das Verbindungselement (13) bildende Matte aus Keramikfasern hergestellt ist, und die innere Begrenzungsfläche des Vorratsbehälters (9) fast vollständig überdeckt und durch ein Stützelement (14) an den Festelektrolyten (3) und an den Vorratsbehälter (9) angepreßt ist.

2. Elektrochemische Speicherzelle nach Anspruch 1, dadurch gekennzeichnet, daß das Stützelement (14) ein aus Molybdän gefertigtes Metallnetz ist.

3. Elektrochemische Speicherzelle nach Anspruch 1 oder 2, dadurch gekennzeichnet, daß der Kathodenraum (8) durch eine Abdeckplatte (11) von dem Vorratsbehälter (9) getrennt ist.

4. Elektrochemische Speicherzelle nach Anspruch 1 bis 3, dadurch gekennzeichnet, daß das als Matte ausgebildete Verbindungselement (13) und das Stützelement (14) durch einen freien ringförmigen Raum (12) zwischen dem äußeren Rand der Abschlußplatte (11) und dem Festelektrolyten (3) in dem Vorratsbehälter (9) geführt ist.

**Claims**

1. Electrochemical storage cell (1) based on sodium and sulphur, having at least one anode space (4) intended for accommodating the anolyte and one cathode space (8) intended for accommodating the catholyte, which spaces are separated from each other by an alkali ion-conducting solid electrolyte (3) and are delimited at least area by a metallic-housing (2), in which arrangement a storage container (9) is provided which is connected to the cathode space (8) via a connecting element (13), characterised in that the storage container (9), which is completely empty before the discharge, is intended for accommodating the sodium polysulphide which forms during the discharge and which can be transported into the storage container (9) with the aid of the hydrostatic pressure building up in the cathode space during the discharging, and that the mat forming the connecting element (13) is produced of ceramic fibres and almost completely covers the inner boundary area of the storage container (9) and is pressed by a support element (14) against the solid electrolyte (3) and against the storage container (9).

2. Electrochemical storage cell according to Claim 1, characterised in that the support element (14) is a metal mesh made of molybdenum.

3. Electrochemical storage cell according to Claim 1 or 2, characterised in that the cathode space (8) is separated by a cover plate (11) from the storage container (9).

4. Electrochemical storage cell according to Claim 1 to 3, characterised in that the connecting element (13) constructed as a mat and the support element (14) is carried into the storage container (9) through a free annular space (12) between the outer edge of the cover plate (11) and the solid electrolyte (3).

**Revendications**

1. Elément d'accumulateur électrochimique (1) à base de sodium et de soufre comprenant au moins une chambre d'anode (4) destinée à recevoir l'anolyte et une chambre de cathode (8) destinée à recevoir le catholyte, lesquelles sont séparées l'une de l'autre par un électrolyte solidifié (3) conduisant les ions alcalins et sont délimitées au moins par zone par un boîtier métallique (2), un réservoir de stockage (9) relié à la chambre de cathode (8) par un élément de raccordement (13) étant prévu, caractérisé par le fait que le réservoir de stockage (9) complètement vide avant la décharge est prévu pour recevoir le polysulfure de sodium qui se forme pendant la décharge et qui est transporté dans le réservoir de stockage (9) à l'aide de la pression hydrostatique s'établissant pendant la décharge dans la chambre de cathode et que le mât formant l'élément de raccordement (13) est fabriqué en fibres céramiques, recouvre presque totalement la surface de limitation interne du réservoir de stockage (9) et est appuyé par un élément-support (14) contre l'électrolyte solidifié (3) et contre le réservoir de stockage (9).

2. Elément d'accumulateur électrochimique selon la revendication 1, caractérisé par le fait que l'élément-support (14) est un réseau métallique fabriqué en molybdène.

3. Elément d'accumulateur électrochimique selon la revendication 1 ou 2, caractérisé par le fait que la chambre de cathode (8) est séparée du réservoir de stockage (9) par une plaque de recouvrement (11).

4. Elément d'accumulateur électrochimique selon les revendications 1 à 3, caractérisé par le fait que l'élément de raccordement (13) réalisé sous forme de mât et l'élément-support (14) pénètrent dans le réservoir de stockage (9) par un espace annulaire libre (12) compris entre le bord extérieur de la plaque de fermeture (11) et l'électrolyte solidifié (3).

# Fig. 1

Fig. 2